# EUROPÄISCHE PATENTSCHRIFT

(11) **EP 1 864 863 B1**
(45) Veröffentlichungstag und Bekanntmachung des Hinweises auf die Patenterteilung: **17.02.2010**
(21) Anmeldenummer: 07010538.2
(22) Anmeldetag: 26.05.2007
(51) Int. Cl.: B60R 16/04, H01M 2/10

(54) **Befestigungsvorrichtung für Batterien**
Mounting device for batteries
Dispositif de fixation pour batteries

(30) Priorität: 08.06.2006 DE 102006026619
(43) Veröffentlichungstag der Anmeldung: 12.12.2007
(73) Patentinhaber: Gebra GmbH & Co. Sicherheitsprodukte KG, 53773 Hennef (DE)
(72) Erfinder: Stei, Alexander, 51545 Waldbröl (DE); Uckelmann, Michael, 59269 Beckum (DE); Schallmo, Dominik, 53578 Windhagen (DE); Pimmer, Holger, 53797 Lohmar (DE); Walgenbach, Reinhold, 53773 Hennef (DE)
(74) Vertreter: Fritz & Brandenburg Patentanwälte

(56) Entgegenhaltungen:
- EP-A1- 0 238 383
- FR-A1- 2 193 261
- FR-A1- 2 806 531

## Beschreibung

Die vorliegende Erfindung bezieht sich auf eine Befestigungsvorrichtung für Batterien in Fahrzeugen, wobei die Batterie auf ihrer Oberseite elektrische Anschlusskontakte aufweist und im Fahrzeug auf einem Träger angeordnet ist, wobei auf dem Träger seitlich zur Batterie mindestens ein Haltekörper angeordnet ist und der Haltekörper über jeweils mindestens eine Schraube, die am Träger anbringbar ist, befestigt ist, wobei der Haltekörper kraftschlüssig in seitliche Auskragungen der Batterie eingreifend seitlich flächig auf die Batterie auflegbar ist, .

Befestigungsvorrichtungen für Batterien sind im Grundsatz bekannt und werden zum Beispiel in der DE 100 61 643 A1 sowie in der DE 195 46 556 C1 beschrieben. Den bekannten Vorrichtungen ist gemeinsam, dass die Batterie über einen U-förmigen Metallbügel, welcher von oben das Batteriegehäuse umfassend befestigt ist, gehalten wird. Die Befestigung des Bügels seinerseits im Fahrzeug erfolgt über Schrauben, Ösen oder Einhängeglieder, wobei der Bügel einer elastischen Klemmspannung unterworfen wird, welche wiederum die Batterie sicher im Fahrzeug halten soll.

Diesen Vorrichtungen ist gemeinsam, dass der metallische Haltebügel nahe zu den auf der Oberseite angeordneten elektrischen Kontakten der Batterie diese umgreift. Wenn die elektrischen Kontakte aufgrund von Korrosion keine ausreichende Leitfähigkeit mehr aufweisen und gereinigt bzw. gewartet oder kontrolliert werden müssen, ist zum einen der Zugang zu den elektrischen Kontakten erschwert und zum anderen besteht die Gefahr des Kurzschlusses der Systemelektronik sowie der Batterie über den metallischen Bügel.

Hinzu kommt, dass Batterien unterschiedlicher Hersteller nicht exakt die gleichen Masse aufweisen. Dies wird bei Vorrichtungen der bekannten Art in der Bauweise des Bügels und der beaufschlagbaren Klemmspannung dahingehend berücksichtigt, dass auch Batterien mit abweichenden Massen aber geeigneter Leistungsfähigkeit über Schrauben oder Hebel mit der entsprechenden Klemmspannung beaufschlagt und befestigt werden können. Allerdings kann dies zu extrem kleinflächigen Auflagepunkten des Bügels am Batteriegehäuse führen. Im Falle einer starken, impulsartigen Kraftbelastung, wie sie bei Unfällen auftreten kann, besteht hier die erhöhte Gefahr der Beschädigung des Batteriegehäuses sowie des Austritts von Batteriesäure und gefährlichen und/oder giftigen Chemikalien.

Besonders im Falle von über Schrauben befestigten Bügeln gestaltet sich das Lösen der Verbindung des Bügels von der Karosserie des Fahrzeuges aufgrund der engen, platzsparenden Bauweise moderner Kraftfahrzeuge als schwierig und die Schrauben werden nicht selten von dem unter Spannung stehenden Bügel bei dem Lösen der Verbindung abgeworfen. Dies geht bei Wartungsarbeiten mit erhöhtem Zeitaufwand und Personalkosten einher.

Weiterhin unterliegen auch die Verbindungspunkte des Bügels selber mit der Karosserie im Falle einer impulsartigen Belastung starken Zug- und Scherkräften. Dies kann zu einer Verformung der Fahrzeugkarosserie bis hin zum Ausreißen der Befestigungsschrauben führen und erhöhte Reparaturkosten verursachen.

Außerdem ist vor allem im Bereich des Motorenraumes aufgrund der erhöhten Umgebungstemperatur und der stärkeren Abgas- und Verschmutzungsbelastung eine stark beschleunigte Korrosion aller Metallteile möglich, was vor allem bei metallischen Bauteilen mit anteilig ausgebildeten, gemeinsamen Oberflächen zum Ausbilden von haftvermittelnden Korrosionsschichten führen kann. Die korrosiven Schichten und Ablagerungen können ein Lösen von zum Beispiel Schraub- oder Steckverbindungen beeinträchtigen bis hin zu unmöglich machen.

Aus der FR-A1-2 193 261 ist eine Befestigungsvorrichtung für eine Batterie in einem Fahrzeug mit den eingangs genannten Merkmalen bekannt. Bei dieser bekannten Lösung wird ein Haltekörper in Form einer Blechlasche verwendet, die über Schrauben und Muttern auf den Träger aufschraubbar ist. Durch das Anziehen der Schraube wird eine Klemmwirkung an der Auskragung der Batterie erzielt. Der als Lasche ausgebildete Haltekörper ist dabei jedoch nur in Richtung der Schraubenachse (somit vertikal) bewegbar.

Der vorliegenden Erfindung liegt die Aufgabe zugrunde, eine Vorrichtung zur Befestigung von Batterien in Fahrzeugen bereitzustellen, welche die geschilderten Nachteile des Standes der Technik überwindet und trotzdem die raumsparende sowie sichere Befestigung einer Batterie in einem Fahrzeug ermöglicht.

Ein weiterer Aspekt der Erfindung ist das Bereitstellen einer Vorrichtung zur Befestigung von Batterien in Fahrzeugen, welche konstruktiv das Auftreten von starken, lokal eng begrenzten Scherkräften auf dem Batteriegehäuse bei starker, impulsartiger Kraftbelastung des Fahrzeugs bzw. der Batterie, vermeidet.

Ein weiterer Aspekt der Erfindung ist das Bereitstellen einer Vorrichtung zur Befestigung von Batterien in Fahrzeugen, welche auch bei ungeübtem Personal das zeitsparende und effektive Montieren/Demontieren einer Batterie im Träger des Fahrzeugs ermöglicht.

Ein weiterer Aspekt der Erfindung ist das Bereitstellen einer Vorrichtung zur Befestigung von Batterien in Fahrzeugen, welche bei impulsartiger Krafteinwirkung auf das Fahrzeug bzw. die Batterie starke, lokal eng begrenzte Krafteinwirkung im Trägerbereich bzw. der Fahrzeugkarosserie vermeidet.

Ein weiterer Aspekt der Erfindung ist es, eine Vorrichtung zur Befestigung von Batterien in Fahrzeugen bereitzustellen, die auch bei verstärkter korrosiver Belastung und/oder Verschmutzung zuverlässig und dauerhaft eine Montage/Demontage erlaubt.

Diese Aufgabe wird mit einer Vorrichtung gemäß Anspruch 1 gelöst. Weitere Vorteile der erfindungsgemäßen Vorrichtung ergeben sich aus den abhängigen Ansprüchen sowie der nachfolgenden Beschreibung.

Wesentlich im Sinne der vorliegenden Erfindung ist die Befestigung einer Fahrzeugbatterie über seitlich an der Batterie flächig aufliegend anzubringende Haltekörper. Ein Haltekörper wird wiederum über eine Schraube, welche in eine Gewindebuchse eingreift, mit dem in der Fahrzeugkarosserie vorgesehenen Träger für die Fahrzeugbatterie verbunden. Hierbei greifen die Haltekörper formschlüssig in seitliche Auskragungen im Batteriegehäuse ein. Auskragungen umfassen im Sinne der vorliegenden Erfindung sowohl überstehende Kanten, Profile, Simse, Stifte, Wulste, Bauchungen oder Wölbungen als auch zurückspringende Ausklinkungen, Buchtungen, Durchbrüche, Rillen oder Nuten sowie deren Kombination wie z. B. bei ineinandergreifenden Schwalbenschwanzprofilen. Die Haltekörper umgreifen die Auskragung formschlüssig und sichern die Batterie sowohl bei lateraler als auch bei vertikaler Krafteinwirkung gegen Verrutschen oder Ausbrechen. Die Batterie wird so sicher an ihrem vorgesehenen Platz im Fahrzeug gehalten. Dieser Platz, der auch als Träger bezeichnet wird, ist z. B. ein Bereich der Fahrzeugkarosse im Motorraum. Die Haltekörper erlauben durch ihre seitliche Auflage auf das Batteriegehäuse den behinderungsfreien Zugang zu den auf der Oberseite der Batterie angeordneten elektrischen Kontakten.

Es versteht sich, dass bei nur einem Haltekörper die Batterie auf der gegenüberliegenden Seite in Widerlager in Form einer gleichartigen, starren Halterung eingreift und seitlich über zusätzliche Auswölbungen im oder am Träger fixiert sein kann.

In einer besonderen Ausführungsform ist die Achse der Schraube im Wesentlichen vertikal, parallel zu den Seitenflächen der Fahrzeugbatterie ausgerichtet. Der Schraubenkopf ist dabei batterieseitig von dem Träger abgewandt in der Fahrzeugkarosserie ausgerichtet. In der Draufsicht auf die befestigte Fahrzeugbatterie sind sowohl die auf der Oberseite der Batterie angeordneten elektrischen Kontakte als auch die seitlich zur Batterie angeordneten Köpfe der Befestigungsschrauben sichtbar. Die Schrauben sind beispielsweise mit Hilfe eines längs erstreckten Steckschlüssels direkt erreichbar und können auch bei platzsparend eingebauter Batterie ohne Weiteres angezogen bzw. gelöst werden. Durch Anziehen der Schrauben wird der Haltekörper mit ausreichender Klemmspannung sowohl um die Auskragung als auch auf die jeweilige Batterieseitenwand auf- bzw. angelegt. Diese Anordnung bietet den erfindungsgemäßen Vorteil, dass die Wartung der Batterie zwanglos ausgeführt werden kann, und dass weiterhin die Batterie trotz raumsparender Bauweise einfach montiert werden kann. Darüber hinaus ist die Gefahr eines Kurzschlusses durch die Befestigungsvorrichtung der Batterie vollständig vermieden.

In einer weiteren Ausführungsform können die Haltekörper in Form von das Batteriegehäuse teilweise oder gänzlich seitlich umfassenden Rahmenelementen ausgeführt sein. Dies bietet den Vorteil, dass über die kontrolliert flächige Auflage des Haltekörpers auf dem Batteriegehäuse punktuelle, impulsartige Scher- und Streckkräfte, wie sie bei einem Autounfall auf die Batterie einwirken können, gleichmäßig über die breitflächig aufliegenden Haltekörper elastisch kompensiert werden können.

Bevorzugt weist eine Vorrichtung einen Verlierschutz für die Schrauben auf, welcher das vollständige Herausdrehen der Schraube aus der Vorrichtung und somit das Separieren der Schraube als einzelnes Bauteil verhindert. Dies kann zum Beispiel über eine den Schraubenkopf drehbar teilumgreifend ausgeformte Fassung oder über ein Widerlager im Gewindebereich realisiert werden. Dadurch wird ein Herausfallen der Schrauben aus der Vorrichtung gänzlich verhindert.

In einer weiteren Ausführungsform kann die Schraube als Teil des Haltekörpers, der das Batteriegehäuse seitlich hält und im Fahrzeug sichert, ausgeführt werden. Sämtliche Schrauben werden so, nachdem ihre Verbindungen zum Träger in der Fahrzeugkarosserie gelöst worden sind, mit dem Haltekörper mit einem Handgriff als komplette Baugruppe aus dem Fahrzeug entfernt und die Batterie kann entnommen werden.

In einer weiteren Ausführungsform wird die Klemmspannung über im Querschnitt konische Führungskörper mit mittig angebrachter Bohrung, welche vom breiteren zum schmaleren Ende des konischen Führungskörpers verläuft, auf die Haltekörper übertragen. Hierbei liegt der Schraubenkopf einer jeweiligen Schraube auf dem breiteren Ende des konischen Führungskörpers auf, während der Schraubenkörper die Bohrung in ihrer gesamten Länge durchmisst und mit dem Schraubengewinde in eine im Träger befestigte Gewindebuchse eintaucht. Durch Festziehen der Schraube wird der konische Führungskörper mit seinem schmaleren Ende auf die Oberfläche des Trägers gedrückt. Die zum oberen Ende hin aufweitende Seitenfläche des Führungskörpers kommt auf der geneigten Außenseite des Haltekörpers zu liegen. Die über das Eindrehen der Schraube erzeugte Abwärtsbewegung des Führungskörpers bedingt eine Verschiebung des Haltekörpers in horizontaler Bewegungsrichtung zur Batterie hin. Der Haltekörper wird vom Führungskörper außenseitig mit Kraft beaufschlagt. Diese Kraft erzeugt zwischen Haltekörper und Batterie eine Klemmspannung, welche eine formschlüssige Auflage des Haltekörpers auf der Batterieseitenfläche und in der seitlichen Auskragung gewährleistet.

Hierbei versteht sich, dass die Führungskörper in ihrer räumlichen Gestaltung der jeweiligen Aufgabe angepasst ausgeführt sein können. Asymmetrische Kegelstümpfe, welche in eine formschlüssig ausgebildete Vertiefung eingesetzt werden, erlauben das Verwenden von selbstzentrierenden Schrauben/Führungskörper-Kombinationen. Die Schrauben/Führungskörper-Kombinationen können nach dem Einsetzen des Führungskörpers in die Vertiefung ohne umständliches Einpassen des Schraubengewindes in die Gewindebuchse mit Hilfe eines Steckschlüssels sofort festgezogen werden. Alternativ sind auch mit einem groben Spiralprofil versehene Führungskörper denkbar, deren zur Batterie weisende Seitenflächen während des Herausdrehens der Schraube eine Teildrehung vollziehen und dadurch die mit dem Haltekörper ausgebildete Auflagefläche außer Eingriff bringen.

In einer weiteren Ausführungsform werden trapezoide Führungskörper verwendet, welche eine dem Haltekörper zugewandte Seite und eine vom Haltekörper abgewandte Seite aufweisen. Hierbei bildet die vom Haltekörper abgewandte Seite mit einer am Träger befestigten Abstützung eine Auflagefläche aus. Über ausgestaltete Führungskörper in Kombination mit formschlüssig ausgestalteten Haltekörpern kann die Zug- und Scherbelastung des Trägers dem Gewicht und den Abmessungen der Batterie angepasst werden. Bei impulsartiger Belastung der Befestigungsvorrichtung wird die Belastung bereits im Haltekörper sowie im Führungskörper teilweise elastisch kompensiert und flächig an den Träger und die Abstützung übertragen. Spannungen im Täger werden gleichmäßiger verteilt, sodass eine Deformation des Trägers bzw. der Fahrzeugkarosserie bei starker Belastung im Rahmen eines Unfalles weitestgehend vermieden werden kann.

Die Führungskörper bieten weiterhin den Vorteil, dass Bereiche, in denen gemeinsame Auflageflächen ausgebildet werden, vorteilhafterweise abgedeckt und so vor verstärkter Korrosion in Kombination mit Verschmutzung geschützt werden können. Umgreift zum Beispiel in einer möglichen Ausführungsform der Führungskörper den Schraubenkopf drehbar randseitig, so wird das Vordringen von Verschmutzungen über die Bohrung des Führungskörpers bis hin zum Gewinde der Schraube effektiv verhindert.

In einer weiteren Ausführungsform werden Haltekörper und trapezoider Führungskörper über einen gemeinsamen, vertikal erstreckten Führungssteg gleitend miteinander verbunden. Der Führungssteg weist dabei z. B. ein SchwalbenschwanzProfil auf und wird in einer teilumgreifenden Nut in seiner Vertikalerstreckung verschiebbar geführt. Im Falle einer drehbar mit dem Führungskörper im Bereich des Schraubenkopfes verbundenen Schraube wird so bei dem Herausdrehen der Schraube aus der Gewindebuchse eine konzertierte Gleitbewegung von Führungskörper gegen Haltekörper entlang ihrer gemeinsamen Oberfläche möglich. Dies gewährleistet zuverlässig das Außer-Eingriff-Bringen des Haltekörpers, während die Schraube in vertikaler Bewegungsrichtung aus dem Träger herausgedreht wird.

Vorteilhafterweise bietet eine asymmetrisch formschlüssige Profilierung der Haltekörper die Möglichkeit, eine Vorrichtung zur Befestigung von Batterien anzubieten, welche nur bei einer spezifischen, vorbestimmten Ausrichtung der Batterie deren Befestigung erlaubt. Dadurch wird bereits konstruktiv das Anschließen einer Batterie mit verkehrter Orientierung der Pole effektiv verhindert.

Die vorliegende Erfindung wird anhand des nachfolgenden Ausführungsbeispiels näher erläutert. Es versteht sich, dass das Ausführungsbeispiel nur eine mögliche Bauweise der vorliegenden Erfindung darstellt, und diese in ihrem Umfang nicht auf das Ausführungsbeispiel begrenzt zu sehen ist.

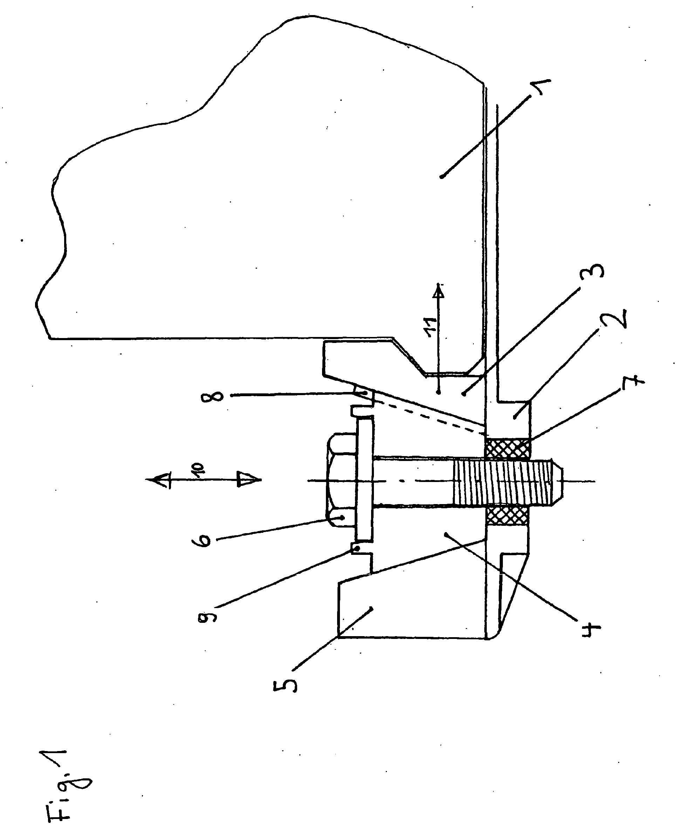

Figur 1 dient zur Veranschaulichung des Ausführungsbeispiels, und gibt konstruktive Elemente einer möglichen, erfindungsgemäßen Befestigungsvorrichtung in einer schematischen Querschnittsansicht wieder.

Bei einer möglichen Ausführungsform einer erfindungsgemäßen Befestigungsvorrichtung für eine Batterie 1 in einem Fahrzeug ist diese auf einem Träger 2 des Fahrzeugs angeordnet. Die Batterie weist auf ihrer Oberseite elektrische Anschlusskontakte auf. Weiterhin weist die Batterie im unterseitigen Bereich seitliche Auskragungen auf. Ein Haltekörper 3 wird nun in einer horizontalen Bewegung entlang der Bewegungsrichtung 11 mit ausreichender Klemmspannung auf das standseitige Ende der Batterie 1 seitlich aufgebracht. Der Haltekörper 3 ist hierbei von im Wesentlichen trapezoidem Querschnitt, wobei die Basis des Trapezes auf dem Träger 2 parallel zur Standseite der Batterie 1 aufliegt. Die zur Batterie hin weisende Seite des Trapezes weist einen formschlüssig ausgestalteten Bereich der Oberfläche auf. Der Haltekörper 3 umgreift mit diesem Bereich die standseitige, seitliche Auskragung der Batterie 1 mit seiner formschlüssigen Oberfläche und liegt zusätzlich auf der sich vertikal erstreckenden Seitenfläche auf. Auf der von der Batterie abgewandten Seite des Trapezes ist ein Führungssteg 8 ausgeformt. Über den Führungssteg 8 ist der Haltekörper 3 mit einem Führungskörper 4 verbunden. Der Führungskörper 4 weist gleichfalls einen trapezoiden Querschnitt auf, wobei das Trapez um 180° gedreht zum Haltekörper angeordnet ist. Der "auf dem Kopf" stehende, im Querschnitt trapezoide Führungskörper, liegt mit der schmaleren Basis bei befestigter Batterie 1 auf der Oberfläche des Trägers 2 auf, während die parallele, breitere Basis von der Oberfläche des Trägers 2 abgewandt nach oben hin ausgerichtet ist. Des Weiteren liegt in befestigtem Zustand die zur Batterie 1 hin weisende Seite des Führungskörpers 4 auf der von der Batterie abgewandten Seitenfläche des jeweiligen Haltekörpers 3 auf. Hierbei taucht der Führungssteg 8 des Haltekörpers 3 in eine zumindest teilweise umgreifende Profilierung des Führungskörpers 4 ein. Die von der Batterie abgewandte Seitenfläche des Führungskörpers 4 liegt in befestigtem Zustand formschlüssig auf einer Abstützung 5 auf dem Träger 2 auf. Die Klemmspannung wird mit Hilfe einer Schraube 6 aufgebracht. Die Schraube 6 reicht durch eine mittige, vertikal verlaufende Bohrung im Führungskörper 4 hindurch und greift in eine Gewindebuchse 7, befestigt am Träger 2 des Fahrzeugs, mit ihrem Gewinde ein. Hierbei ist auf der breiten, nach oben weisenden Oberfläche des im Querschnitt trapezoiden Führungskörpers 4 ein Verlierschutz 9 vorgesehen, welcher den Schraubenkopf drehbar teilweise umgreift. Durch diesen Kunstgriff wird die nachfolgend im Detail erläuterte Relativbewegung von Führungskörper 4 und Haltekörper 3 gegeneinander ermöglicht. Wird die Schraube 6 entlang der vertikalen Bewegungsrichtung 10 gelöst, so wird der Führungskörper 4 über den teilweise umgreifenden Verlierschutz 9 mit angehoben. Der Führungssteg 8 des Haltekörpers 3 erfährt über den Führungskörper 4 die vorbeschriebene, nach oben gerichtete Vertikalbewegung. Dieser Bewegung ist das Eigengewicht des Haltekörpers 3 entgegengesetzt und der Haltekörper 3 gleitet in der teilweise umgreifend ausgeführten Profilierung des Führungskörpers 4 über den Führungssteg 8 entlang der zwischen Führungskörper 4 und Haltekörper 3 gemeinsam ausgebildeten Auflagefläche nach unten. Diese Gleitbewegung bedingt gleichzeitig die horizontale Bewegung des Haltekörpers 3 von der Batterie 1 weg zur Schraube 6 hin. Bei ausreichend ausgedrehter Schraube 6 ist der Haltekörper 3 so weit zur Batterie beabstandet, dass diese zwangfrei ohne Weiteres entnommen werden kann. Zur Befestigung einer Batterie erfolgt umgekehrt bei eindrehender Schraube eine horizontale Bewegung des Haltekörpers 3 in Richtung der Batterie, bis der Haltekörper 3 mit ausreichender Klemmspannung auf der seitlichen Auskragung bzw. Seitenfläche aufliegt.

Es versteht sich, dass die Materialien von Haltekörper 3 und Führungskörper 4 hierbei so gewählt werden, dass eine sichere, vibrationsfeste Befestigung der Batterie mit ausreichender Klemmspannung gegeben ist.

Bei der Befestigung der Batterie 1 bietet eine nachfolgend im Detail geschilderte Profilierung von Schraube 6 und Führungskörper 4 besondere Vorteile. So können Schraube 6 und Führungskörper 4 an den Stellen, an denen Sie bei befestigter Batterie aufeinander flächig aufliegen z. B. mit parallel angeordneten Sägezahnprofilen oder pyramidalen Spitzen versehen werden. Bei befestigter Batterie greifen die gegenüberliegend angeordneten Profile ineinander ein. Die während des Befestigens aufgebrachte Zugspannung wird durch die Verzahnung teilweise elastisch kompensiert und erzeugt so eine Klemmspannung. Die durch die verzahnten Profile erzielte Klemmspannung zwischen Schraube 6 und Führungskörper 4 sichert die Schraube gegen Ausdrehen durch Vibrationen oder Erschütterungen, ohne dass ein separates Bauteil wie z. B. eine elastische Unterlagscheibe verwendet werden muss.

Die vorliegende Erfindung stellt eine Vorrichtung zur Befestigung von Batterien in Kraftfahrzeugen, welche das platzsparende und effektive, sichere Befestigen von Batterien in Verbindung mit frei zugänglichen Batterieanschlusskontakten und vermindertem Risiko eines Kurzschlusses des elektrischen Systems oder der Batterie durch die Vorrichtung ermöglicht bereit.

### Bezugszeichenliste

- 1: Batterie
- 2: Träger
- 3: Haltekörper
- 4: Führungskörper
- 5: Abstützung
- 6: Schraube
- 7: Gewindebuchse
- 8: Führungssteg
- 9: Verlierschutz
- 10: vertikale Bewegungsrichtung Schraube
- 11: Horizontale Bewegungsrichtung Haltekörper

## Patentansprüche

1. Befestigungsvorrichtung für eine Batterie (1) in einem Fahrzeug, wobei die Batterie (1) auf ihrer Oberseite elektrische Anschlusskontakte aufweist und im Fahrzeug auf einem Träger (2) angeordnet ist, wobei auf dem Träger (2) seitlich zur Batterie mindestens ein Haltekörper (3) angeordnet ist und der Haltekörper (3) über jeweils mindestens eine Schraube (6), die am Träger (2) angebracht ist, befestigt ist, wobei der Haltekörper (3) kraftschlüssig in seitliche Auskragungen der Batterie eingreifend seitlich flächig auf die Batterie aufgelegt ist,
**dadurch gekennzeichnet, dass** der Haltekörper (3) über die Schraube (6) in einer horizontalen Bewegung entlang der Bewegungsrichtung (11) in Richtung der Batterie verfahren wird und die Schraube (6) jeweils in einer Gewindebuchse (7) am Träger (2) angebracht ist.

2. Vorrichtung nach Anspruch 1, **dadurch gekennzeichnet, dass** der/die Haltekörper (3) in Form eines seitlich an den Auskragungen der Batterie anliegend angeordneten Rahmens ausgeführt ist/sind.

3. Vorrichtung nach Anspruch 1 oder 2, **dadurch gekennzeichnet, dass** die Vorrichtung einen Verlierschutz (9) umfasst, über den die Schraube (6) nicht entnehmbar mit der Vorrichtung verbunden ist.

4. Vorrichtung nach einem der vorhergehenden Ansprüche, **dadurch gekennzeichnet, dass,** die Vorrichtung Führungskörper (4), aufweisend ein breiteres und ein schmaleres Ende sowie einen konisch verjüngenden Querschnitt und mindestens eine vom breiteren zum schmaleren Ende verlaufende Bohrung, aufweist, wobei bei befestigter Batterie jeweils eine Schraube (6) in der Bohrung eines Führungskörpers (4) angeordnet ist und der Schraubenkopf der Schraube (6) auf dem breiteren Ende des Führungskörpers (4) aufliegend angeordnet ist, wobei der Führungskörper (4) kraftschlüssig und flächig an dem Haltekörper (3) aufliegend angeordnet ist.

5. Vorrichtung nach dem vorhergehenden Anspruch, **dadurch gekennzeichnet, dass** der Kopf der jeweiligen Schraube (6) drehbar mit dem Führungskörper (4) verbunden ist.

6. Vorrichtung nach einem der beiden vorhergehenden Ansprüche, **dadurch gekennzeichnet, dass** Haltekörper (3) und Führungskörper (4) gegeneinander verschiebbar miteinander verbunden sind.

7. Vorrichtung nach dem vorhergehenden Anspruch, **dadurch gekennzeichnet, dass** Haltekörper (3) und Führungskörper (4)jeweils über mindestens einen vertikal erstreckten Führungssteg (8) miteinander verbunden sind.

8. Vorrichtung nach einem der vorhergehenden Ansprüche, **dadurch gekennzeichnet, dass** der/die Haltekörper (3) und/oder die Batterie (1) asymmetrisch formschlüssig ausgeformte Profilierungen aufweisen.

9. Befestigungsvorrichtung für eine Batterie nach Anspruch 1, **dadurch gekennzeichnet, dass** die Befestigungsvorrichtung weiterhin mindestens einen im Querschnitt trapezoiden Führungskörper (4), aufweisend ein breiteres und ein schmaleres Ende, sowie einen konisch verjüngenden Querschnitt und eine vom breiteren zum schmaleren Ende verlaufende Bohrung, umfasst, wobei jeweils eine Schraube (6) in der Bohrung eines Führungskörpers (4) angeordnet ist und der Führungskörper mit der zur Batterie weisenden Seite mit dem Haltekörper eine Gleitfläche ausbildend angeordnet ist, und weiterhin der Führungskörper (4) mit der von der Batterie abgewandten Seite auf einer Abstützung (5) zur Auflage gebracht werden kann, und der Schraubenkopf der Schraube auf dem breiteren Ende des Führungskörpers aufliegend angeordnet ist, wobei weiterhin der Kopf der jeweiligen Schraube (6) über einen Verlierschutz (9) drehbar mit dem Führungskörper (4) verbunden ist, und wobei Haltekörper (3) und Führungskörper (4) entlang der Gleitfläche jeweils über mindestens einen vertikal erstreckten Führungssteg (8) gegeneinander verschiebbar miteinander verbunden sind.

## Claims

1. A fastening device for a battery (1) in a vehicle, said battery (1) comprising electrical terminal contacts on its top side and being disposed on a support (2) in said vehicle, at least one holding member (3) being disposed on said support (2) on the side of the battery and said holding member (3) being fastened to said support (2) through at least one screw (6) respectively fixed to said support (2), said holding member (3) being placed planar onto the battery on the side thereof so as to frictionally engage lateral projections of the battery,
**characterized in that** said holding member (3) is displaced toward the battery by the screw (6) in a horizontal movement along the direction of movement (11) and that said screw (6) is fixed to the support (2) in a threaded bushing (7).

2. The device as set forth in claim 1, **characterized in that** the holding member(s) (3) is/are implemented in the form of a frame that is disposed so as to fit laterally against the projections of the battery.

3. The device as set forth in claim 1 or 2, **characterized in that** the device incorporates a device offering a security from being lost (9) through which the screw (6) is connected to the device so that it cannot be removed.

4. The device as set forth in any one of the previous claims, **characterized in that** the device comprises guide members (4) comprising a wider and a more narrow end as well as a conically tapering cross section and at least one bore extending from the wider to the more narrow end, a screw (6) being respectively disposed in the bore of a guide member (4) when the battery is fastened and the screw head of said screw (6) being disposed so as to rest on the wider end of said guide member (4), said guide member (4) being disposed so as to rest planar and with frictional contact on said holding member (3).

5. The device as set forth in the previous claim, **characterized in that** the head of the respective screw (6) is rotatably connected to the guide member (4).

6. The device as set forth in any one of the two previous claims, **characterized in that** holding member (3) and guide member (4) are connected together so as to be slidable with respect to each other.

7. The device as set forth in the previous claim, **characterized in that** holding member (3) and guide member (4) are connected together through at least one vertically extending guide web (8).

8. The device as set forth in any one of the previous claims, **characterized in that** the holding member(s) (3) and/or the battery (1) comprise profiles that are formed to interlock asymmetrically.

9. The fastening device for a battery as set forth in claim 1, **characterized in that** the fastening device further incorporates at least one guide member (4) that is trapezoidal in cross section and that comprises a wider and a more narrow end as well as a conically tapering cross section and a bore extending from the wider to the more narrow end, a screw (6) being respectively disposed in the bore of a guide member (4) and said guide member being disposed so that its side pointed toward the battery forms, together with the holding member, a gliding surface and that the side of said guide member (4) that is turned away from the battery can further be brought to rest on an abutment (5) and that the screw head of the screw is disposed to rest on the wider end of the guide member, the head of the respective one of the screws (6) being further rotatably connected to the guide member (4) through a device offering security from being lost (9) and holding member (3) and guide member (4) being connected together so as to be displaceable with respect to each other along the gliding surface, respectively through at least one vertically extending guide web (8).

## Revendications

1. Dispositif de fixation pour une batterie (1) dans un véhicule, ladite batterie (1) présentant, sur sa face supérieure, des contacts de connexion et étant disposée dans le véhicule sur un support (2), au moins un corps de maintien (3) étant disposé sur ledit support (2), à côté de la batterie et ledit corps de maintien (3) étant fixé respectivement par au moins une vis (6) qui est montée sur ledit support (2), le corps de maintien (3) étant posé à plat latéralement sur la batterie, tout en s'engageant par adhérence dans des saillies latérales de la batterie, **caractérisé par le fait que** ledit corps de maintien (3) est déplacé par la vis (6) dans un mouvement horizontal suivant la direction de mouvement (11) vers la batterie et que ladite vis (6) est montée respectivement dans une douille taraudée (7) sur le support (2).

2. Dispositif selon la revendication 1, **caractérisé par le fait que** le/les corps de maintien (3) est/sont réalisé(s) sous forme d'un cadre disposé de manière à s'appliquer latéralement contre lesdites saillies de la batterie.

3. Dispositif selon la revendication 1 ou 2, **caractérisé par le fait que** le dispositif comprend un dispositif anti-perte (9) par lequel ladite vis (6) est reliée au dispositif de manière à ne pas pouvoir être enlevée.

4. Dispositif selon l'une quelconque des revendications précédentes, **caractérisé par le fait que** le dispositif comprend des corps de guidage (4) présentant une extrémité plus large et une extrémité plus étroite ainsi qu'une section transversale se rétrécissant de façon conique et au moins un perçage s'étendant de l'extrémité plus large vers l'extrémité plus étroite; lorsque la batterie est fixée, respectivement une vis (6) étant disposée dans le perçage d'un corps de guidage (4) et la tête de vis de la vis (6) étant disposée de manière à s'appliquer contre l'extrémité plus large du corps de guidage (4), ledit corps de guidage (4) étant disposé de manière à s'appliquer par adhérence et à plat contre le corps de maintien (3).

5. Dispositif selon la revendication précédente, **caractérisé par le fait que** la tête de la vis respective (6) est reliée à rotation au corps de guidage (4).

6. Dispositif selon l'une quelconque des deux revendications précédentes, **caractérisé par le fait que** lesdits corps de maintien (3) et corps de guidage (4) sont reliés entre eux de manière à être déplaçables l'un par rapport à l'autre.

7. Dispositif selon la revendication précédente, **caractérisé par le fait que** lesdits corps de maintien (3) et corps de guidage (4) sont reliés entre eux respectivement par au moins une entretoise de guidage (8) s'étendant verticalement.

8. Dispositif selon l'une quelconque des revendications précédentes, **caractérisé par le fait que** le/les corps de maintien (3) et/ou la batterie (1) présentent des profilages formés de façon asymétrique à engagement positif.

9. Dispositif de fixation pour une batterie selon la revendication 1, **caractérisé par le fait que** le dispositif de fixation comprend en outre au moins un corps de guidage (4) qui est trapézoïdal en coupe transversale et qui présente une extrémité plus large et une extrémité plus étroite ainsi qu'une section transversale se rétrécissant de façon conique et un perçage s'étendant de l'extrémité plus large vers l'extrémité plus étroite, respectivement une vis (6) étant disposée dans ledit perçage d'un corps de guidage (4) et ledit corps de guidage étant disposé de manière à ce que sa face montrant vers la batterie forme avec le corps de maintien une surface de glissement, et, en outre, ledit corps de guidage (4) peut être mis en appui, avec la face montrant dans la direction opposée à la batterie, sur un appui (5), et la tête de vis de la vis est disposée de manière à s'appliquer contre l'extrémité plus large du corps de guidage, en outre la tête de la vis respective (6) étant reliée à rotation, par un dispositif anti-perte (9) au corps de guidage (4), et les corps de maintien (3) et corps de guidage (4) étant reliés entre eux de manière à être déplaçables l'un par rapport à l'autre le long de ladite surface de glissement respectivement par au moins une entretoise de guidage (8) s'étendant verticalement.
